# EUROPÄISCHE PATENTSCHRIFT

(11) **EP 1 097 842 B1**
(45) Veröffentlichungstag und Bekanntmachung des Hinweises auf die Patenterteilung: **13.09.2006**
(21) Anmeldenummer: 00123837.7
(22) Anmeldetag: 02.11.2000
(51) Int. Cl.: B60Q 3/02, F21V 8/00

(54) **Leuchte und Verfahren zum Steuern einer Leuchte für Fahrzeuginnenräume**
Light and device for controlling an interior light of a vehicle
Eclairage et dispositif de commande de l'éclairage intérieur d'un véhicule

(30) Priorität: 03.11.1999 DE 19952795
(43) Veröffentlichungstag der Anmeldung: 09.05.2001
(73) Patentinhaber: Hella KGaA Hueck & Co., 59552 Lippstadt (DE)
(72) Erfinder: Labahn, Nils, Dr., 59557 Lippstadt (DE); Decker, Detlef, Dipl.-Ing., 59558 Lippstadt (DE); Nachtigall, Klaus, Dipl.-Ing., 79199 Kirchzarten (DE)
(74) Vertreter: Ostermann, Thomas

(56) Entgegenhaltungen:
- DE-A- 19 603 025
- DE-C- 3 916 865

## Beschreibung

Die Erfindung betrifft eine Leuchte für Fahrzeuginnenräume mit einer Lichtquelle, einem Lichtaustritt und einem die Lichtquelle schaltenden optischen Sensor.

Leuchten für Fahrzeuginnenräume, wie sie beispielsweise als Leseleuchten verwendet werden, lassen sich häufig nur schlecht bedienen, da im dunklen Fahrzeuginnenraum der Schalter schwer auffindbar ist. Weil Schalter meistens in das Leuchtengehäuse integriert sind, vermutet sie der Benutzer normalerweise in der Nähe des Lichtaustrittes. Eine solche gattungs gemäße Leseleuchte ist beispielsweise aus der DE 19 652 095 A 1 bekannt. Nachteilig bei diesen Leseleuchten ist, daß zur Steuerung bzw. Schaltung der Leseleuchte in der Nähe des Lichtaustritts eine elektrische Leitung parallel zum Lichtleiter geführt werden muß, was einen hohen Montage- und Produktaufwand bedeutet.

Weiterhin ist aus der DE 196 03 025 C2 eine Leuchte bekannt, die eine Lichtquelle aufweist, die von einem Reflektor umgeben ist, der das Licht der Lichtquelle bündelt und in einen Lichtleiter einkoppelt. Dem Lichtleiter vorgelagert ist dabei ein optischer Sensor, der auf ihn fallendes Tageslicht eines zusätzlich angeordneten Tageslicht-Lichtleiters detektiert und die Lichtquelle über ein Vorschaltgerät in Abhängigkeit von dem Tageslicht ein- bzw. ausschaltet oder auch dimmt.

Nachteilig dabei ist, daß die Lichtquelle bzw. die Leuchte nur in Abhängigkeit vom Tageslicht geschaltet werden kann. Ein unerwünschtes Einschalten bei Dunkelheit kann so nur durch einen zusätzlichen Schalter verhindert werden.

Aufgabe der vorliegenden Erfindung ist es daher, die bekannten Leuchten so zu verbessern, daß sie sich auch bei Dunkelheit durch einen Nutzer leicht schalten lassen und einfach und kostengünstig zu montieren sind. Auf einen einen speziellen elektrischen Schalter in der Nähe des Lichtaustrittes soll dabei verzichtet werden können.

Diese Aufgabe wird erfindungsgemäß dadurch gelöst, daß der optische Sensor als Empfänger einer Reflexionslichtschranke ausgebildet ist, deren optischer Sender Licht über den Lichtaustritt abstrahlt, das bei Annäherung an den Lichtaustritt reflektiert, und zumindest teilweise über den Lichtaustritt auf den Empfänger leitbar ist.

Durch die Ausbildung des optischen Sensors als Empfänger einer Reflexionslichtschranke kann die Leuchte berührungslos durch Annäherung an den Lichtaustritt mit der Hand oder einem Gegenstand geschaltet werden. Unter Schalten sollen hier die Funktionen Einschalten/Ausschalten und Dimmen verstanden werden.

Gemäß einer bevorzugten Ausführungsform der Erfindung ist zwischen Lichtquelle und Lichtaustritt ein Lichtleiter angeordnet, der an seinem der Lichtquelle zugewandten Ende eine Lichteintrittsfläche aufweist, in die das Licht der Lichtquelle eingekoppelt wird. Die Lichtquelle ist dabei von einem Reflektor umgeben, der das Licht der Lichtquelle bündelt und in die Lichteintrittsfläche einkoppelt.

Sender und Empfänger können dabei der Lichtquelle benachbart sein und relativ einfach mit elektrischer Energie versorgt werden. Auf die Anordnung eines separaten elektrischen Schalters in der Nähe des Lichtaustritts und auf eine elektrische Zuführung zu einem elektrischen Schalter kann gänzlich verzichtet werden. Somit ist es nicht notwendig, parallel zu dem Lichtleiter eine elektrische Leitung zu verlegen. Die Einbau- und Produktkosten werden dadurch erheblich verringert.

Nach einer weiteren bevorzugten Ausführungsform der Erfindung ist der optische Sender als eine Infrarot-Leuchtdiode ausgebildet. Der Empfänger ist dabei als eine Infrarot-Fotodiode oder als ein Infrarot-Fototransistor ausgebildet.

Durch die Verwendung von Infrarotstrahlung - also von Licht im nicht sichtbaren Bereich - wird eine unerwünschte Störung im Fahrzeuginnenraum durch das für das Schalten der Lichtquelle verwendete Licht zuverlässig vermieden.

Gemäß einer weiteren bevorzugten Ausführungsform der Erfindung sind Sender und Empfänger am Reflektor der Lichtquelle so positioniert, daß einerseits eine möglichst geringe Reflektorfläche benötigt wird und andererseits Sender und Empfänger auf die Lichteintrittsfläche fokussiert sind.

Durch die Anordnung von Sender und Empfänger am Reflektor wird ein relativ kompakter Aufbau der Leuchte erzielt.

Nach einer weiteren bevorzugten Ausführungsform der Erfindung ist zwischen Lichtquelle und Lichteintrittsfläche ein teildurchlässiger Spiegel angeordnet, über den Sender und Empfänger auf die Lichteintrittsfläche fokussiert sind.

Durch die Verwendung eines teildurchlässigen Spiegels können Sender und Empfänger dicht nebeneinander im rechten Winkel zu der optischen Achse der Lichtquelle mit Reflektor angeordnet werden. Die Verbindung zu der notwendigen elektronischen Schaltung läßt sich so besonders einfach verwirklichen.

Nach einer weiteren bevorzugten Ausführungsform der Erfindung sind Sender und Empfänger auf der der Lichtquelle abgewandten Rückseite des Reflektors angeordnet. Der Reflektor ist dabei für Infrarotstrahlung durchlässig, so daß für Infrarotstrahlung Sender und Empfänger auf die Lichteintrittsfläche fokussiert sind.

Der Reflektor projiziert im wesentlichen nur den sichtbaren Anteil des Lichtes der Lichtquelle über die Lichteintrittsfläche in den Lichtleiter, so daß ein Durchtritt für Infrarotstrahlung möglich ist. Sender und Empfänger können dabei vorteilhaft so positioniert werden, daß ein weitgehend ungehinderter Durchtritt der Infrarotstrahlen durch den Reflektor möglich ist. Gegebenenfalls können zur optimalen Fokussierung der Strahlen weitere optische Elemente, wie z. B. Fresnellinsen, hinter dem Reflektor angeordnet werden.

Gemäß einer weiteren bevorzugten Ausführungsform der Erfindung sind Sender und Empfänger über Lichtleiter mit dem Lichtaustritt verbunden. Die Lichtleiter sind dabei als faseroptische Lichtleiter ausgebildet.

Durch die Einkopplung des Infrarotlichtes über separate Lichtleiter können herkömmliche Leuchtenanordnungen weiter verwendet werden, wobei lediglich der Lichtleiter ausgetauscht werden muß. Es ist auch möglich, für Sender und Empfänger einen gemeinsamen faseroptischen Lichtleiter zu verwenden.

Nach einer Weiterbildung der Erfindung ist die Lichtquelle mit einer Steuereinheit gekoppelt, die vorzugsweise auf einer dem Lichtaustritt abgewandten Rückseite der Lichtquelle angeordnet ist. Hierdurch wird gewährleistet, daß bei eingeschalteter Leuchte die Steuereinheit nicht durch die Abdeckscheibe hindurch von der Umgebung aus sichtbar ist. Darüber hinaus weist die Leuchte hierdurch einen kompakten Aufbau auf, wobei sie platzsparend in einer Öffnung des Fahrzeugs angeordnet sein kann.

Nach einer Weiterbildung der Erfindung sind sowohl der Sender als auch der Empfänger auf einer die Steuereinheit tragenden Leiterplatte angeordnet. Mittels eines zusätzlichen Lichtleiters können der Sender und Empfänger mit einer in Lichtausbreitungsrichtung vorne liegenden, das Sendesignal abstrahlenden Auskoppelstelle bzw. das Empfangssignal aufnehmenden Einkoppelstelle gekoppelt sein. Vorzugsweise werden die zusätzlichen Lichtleiter zu einem das von der Lichtquelle emittierte Licht führenden Lichtleiter geführt, der als Übertragungskanal für das Sendesignal bzw. das Empfangssignal dient.

Nach einer Weiterbildung der Erfindung weist der Reflektor der Leuchte einen Durchbruch auf, in dem der zusätzliche Lichtleiter in Richtung des Senders bzw. Empfängers verläuft, so daß der Sender bzw. der Empfänger platzsparend im Bereich des Randes des Reflektors auf der Rückseite desselben angeordnet sein kann. Dadurch, daß der Sender bzw. der Empfänger in einem randnahen Bereich des Reflektors angeordnet ist, wird der Strahlengang des von der Lichtquelle emittierten Lichtes nur unwesentlich gestört.

Nach einer weiteren Ausführungsform der Erfindung ist die Lichtquelle als Leuchtdiode ausgebildet, in die ein von der Steuereinheit erzeugtes moduliertes Sendesignal einprägbar ist. Hierdurch hat die Lichtquelle eine Doppelfunktion. Zum einen dient sie zum Erzeugen von Lichtstrahlen, die zur Beleuchtung des Fahrzeuginnenraumes dienen. Zum anderen dient sie als Sender zur Erzeugung eines Sendesignals, mittels dessen das Vorhandensein eines in die Nähe der Leuchte bewegten Körpers überprüft werden kann.

Aufgabe der vorliegenden Erfindung ist es ferner, ein Verfahren zum Steuern einer Leuchte für Fahrzeuginnenräume anzugeben, so dass ein sicheres und zuverlässiges Erkennen eines in die Nähe der Leuchte bzw. einer vorgegebenen Einkoppelstelle derselben bewegten Körper erkannt wird, wobei der Komfort beim Betätigen der Leuchte erhöht wird.

Diese Aufgabe wird in Verbindung mit dem Oberbegriff des Patentanspruchs 18 dadurch gelöst, daß das von einem Sender des optischen Sensors ein Mustersignal erzeugt und einer Auskoppelstelle der Leuchte zugeführt wird, daß über eine Einkoppelstelle der Leuchte ein Empfangssignal zu einem Empfänger des optischen Sensors geleitet wird, daß das Empfangssignal mit den von dem Sender erzeugten Mustersignal verglichen wird, so daß das Empfangssignal als ein an ein in der Nähe der Auskoppelstelle gehaltener Körper reflektiertes Reflexionssignal erkannt werden kann, und daß bei Vorliegen einer Übereinstimmung des Empfangssignals mit dem Mustersignal das Steuersignal generiert wird zum Ansteuern der Lichtquelle.

Das erfindungsgemäße Verfahren nach Anspruch 18 ermöglicht ein sicheres Erkennen eines in die Nähe der Leuchte bewegten Körpers, insbesondere einer Hand. Dadurch, daß das Sendesignal als Mustersignal, vorzugsweise als ein moduliertes Sendesignal ausgebildet ist, kann durch Vergleich desselben mit einem detektierten Empfangssignal sicher das Reflexionssignal von einem einen unerwünschten Schaltvorgang hervorrufenden Fremdlicht unterschieden werden.

Nach einer Weiterbildung des erfindungsgemäßen Verfahrens wird das Sendesignal als ein impulsmoduliertes Sendesignal von dem Sender abgestrahlt, so daß das Sendesignal mittels einer einfachen Pulsmodulationsschaltung generiert werden kann.

Aufgabe der vorliegenden Erfindung ist es weiterhin, ein Verfahren zum Steuern einer Leuchte für Fahrzeuginnenräume anzugeben, so daß sicher und zuverlässig das Betätigen der Leuchte mittels des Annäherns eines Körpers an dieselbe ermöglicht wird, wobei die Steuerung der Leuchte mit einem relativ geringen Energieverbrauch erfolgt.

Diese Aufgabe wird in Verbindung mit dem Oberbegriff des Patentanspruchs 21 dadurch gelöst, daß sich die Steuereinheit in einem energiesparenden Schlafzustand befindet und erst dann in einen ein Mustersignal abgebenden Weckzustand übergeht, wenn ein Empfangssignal in einem Empfänger detektiert wird, daß in dem Weckzustand der Steuereinheit das Mustersignal von einem Sender abgestrahlt wird und anschließend das von dem Empfänger detektierte Empfangssignal auf Übereinstimmung mit dem gesendeten Mustersignal überprüft wird zur Erkennung eines in der Nähe einer Auskoppelstelle positionierten Körpers und daß in dem Aktivierungszustand der Steuereinheit ein Steuersignal generiert wird zum Ansteuern der Lichtquelle.

Der Vorteil des erfindungsgemäßen Verfahrens besteht insbesondere darin, daß sich die Steuereinheit der Leuchte grundsätzlich in einem Schlafzustand befindet, in dem keine Sendesignale ausgesandt werden. Vorteilhaft fließt in diesem Schlafzustand kein Ruhestrom in dem Sender, so daß der Energieverbrauch wesentlich verringert werden kann. Lediglich der Empfänger ist in einem Empfangszustand, so daß Empfangssignale detektiert werden können. Für den Fall, daß ein Empfangssignal detektiert wird, wird die Steuereinheit in einen Weckzustand versetzt, in dem ein Sendesignal erzeugt und von dem Sender abgestrahlt wird. Nunmehr kann in Verbindung mit einem detektierten Empfangssignal das Vorliegen eines Reflexionssignales überprüft werden, wobei im positiven Fall die Steuereinheit in den Aktivierungszustand versetzt wird. In dem Aktivierungszustand wird von der Steuereinheit ein Steuersignal an die Lichtquelle abgegeben, das das Einschalten derselben bewirkt. Ferner wird nach einer vorgegebenen Zeitspanne die Lichtquelle wieder ausgeschaltet. Erst wenn dann kein mit dem Sendesignal übereinstimmendes Empfangssignal detektiert wird, steht fest, daß die Lichtquelle endgültig ausgeschaltet werden soll. Die Steuereinheit wird zurück in den Schlafzustand versetzt, indem der Sender quasi ausgeschaltet ist. Grundgedanke des erfindungsgemäßen Verfahrens ist, den Sender grundsätzlich in einem ausgeschalteten Zustand zu halten und diesen erst bei Vorliegen eines Empfangssignals in einen das Erzeugen von einem Sendesignal bewirkenden Weckzustand zu versetzen. Hierdurch können Leuchten energiesparend berührungslos geschaltet werden.

Nach einer Weiterbildung des erfindungsgemäßen Verfahrens kann die Steuereinheit auch in Abhängigkeit von dem Betätigen eines der Leuchte zugeordneten Funktionselementes in einen Weckzustand überführt werden. Bei dieser Variante des Verfahrens befinden sich sowohl der Sender als auch der Empfänger während des Schlafzustandes der Steuereinheit in einem ausgeschalteten Zustand. Hierdurch kann eine weitere Reduzierung des Energieverbrauches bewirkt werden. Nach Betätigen des Funktionselementes wird lediglich der Empfänger in einen Betriebszustand versetzt. Der Sender wird erst dann in einen Weckzustand versetzt, wenn der Empfänger ein Empfangssignal detektiert hat. Beispielsweise kann das Funktionselement als eine Sonnenblende ausgebildet sein, die in einer hochgeklappten Stellung die Steuereinheit in den Schlafzustand und in der heruntergeklappten Stellung den Empfänger in den Betriebszustand versetzt.

Weitere Einzelheiten der Erfindung ergeben sich aus der nachfolgenden ausführlichen Beschreibung und den beigefügten Zeichnungen, in denen bevorzugte Ausführungsformen der Erfindung beispielsweise veranschaulicht sind.

In den Zeichnungen zeigen:

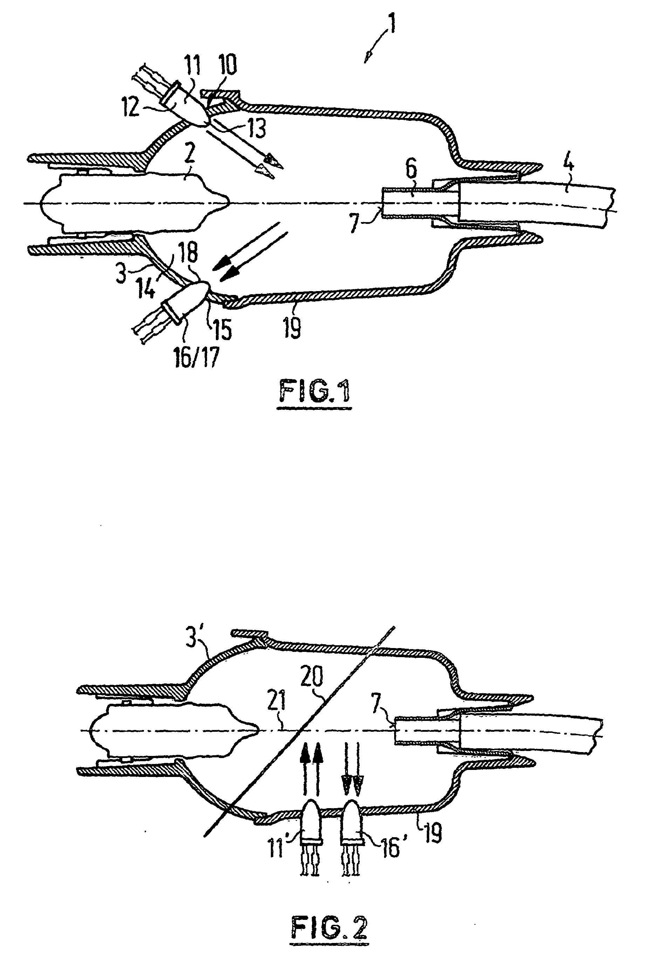

- Figur 1:: Eine Seitenansicht einer Leuchte für Fahrzeuginnenräume mit einer an einem Reflektor angeordneten Reflexionslichtschranke,
- Figur 2:: eine Seitenansicht einer Leuchte für Fahrzeuginnenräume mit einem zwischen Lichtquelle und Lichtleiter angeordneten teildurchlässigen Spiegel,

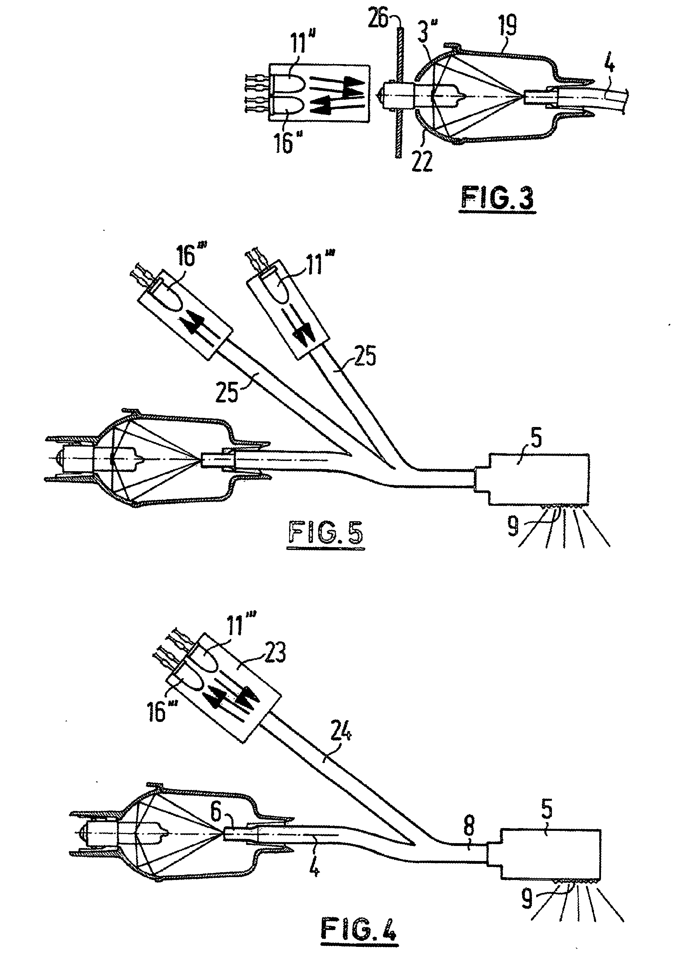

- Figur 3:: eine Seitenansicht einer Leuchte für Fahrzeuginnenräume mit einer an der Rückseite eines Reflektors angeordneten Reflexionslichtschranke,
- Figur 4:: eine Seitenansicht einer Leuchte für Fahrzeuginnenräume mit einer Reflexionslichtschranke, die über einen separaten Lichtleiter mit einem Lichtaustritt verbunden ist,
- Figur 5:: eine Seitenansicht einer Leuchte für Fahrzeuginnenräume mit einem Sender und einem Empfänger einer Reflexionslichtschranke, die über separate Lichtleiter mit einem Lichtaustritt verbunden sind,
- Figur 6:: einen schematischen Teilschnitt einer Leuchte für Fahrzeuginnenräume mit einer an der Rückseite eines Reflektors angeordneten Reflexionslichtschranke, wobei ein Sender und ein Empfänger über jeweils einen zusätzlichen Lichtleiter zu einer Lichteintrittsfläche eines Lichtleiters gekoppelt sind, entlang der Linie VI - VI gemäß Figur 7,
- Figur 7:: eine Vorderansicht einer Leuchte gemäß Figur 6,
- Figur 8:: eine schematische Seitenansicht eines Bestandteils einer Leuchte mit einem gemeinsamen zusätzlichen Lichtleiter für einen Sender und einen Empfänger,
- Figur 9:: ein Blockschaltbild von elektrischen Baueinheiten für eine Leuchte,
- Figur 10:: eine Ansteuerschaltung für einen Sender als Teil einer Steuereinheit,
- Figur 11:: ein Flußdiagramm eines Steuerprogramms für eine Leuchte nach einem ersten Ausführungsbeispiel und
- Figur 12:: ein Flußdiagramm eines Steuerprogramms einer Leuchte nach einem zweiten Ausführungsbeispiel.

Eine Leuchte 1 für Fahrzeuginnenräume besteht im wesentlichen aus einer Lichtquelle 2, einem Reflektor 3, einem Lichtleiter 4 und einem Lichtaustrittselement 5.

Die Lichtquelle 2 ist in einem ersten Brennpunkt des Reflektors 3 angeordnet, der das Licht der Lichtquelle auf eine an einem ersten Ende 6 des Lichtleiters 4 angeordnete Lichteintrittsfläche 7 fokussiert. Der Lichtleiter 4 weist an seinem dem ersten Ende 6 abgewandten zweiten Ende 8 das Lichtaustrittselement 5 auf. Einem nicht weiter dargestellten Fahrzeuginnenraum zugewandt, weist das Lichtaustrittselement 5 einen Lichtaustritt 9 auf.

Der Reflektor 3 weist eine erste seitliche Öffnung 10 auf, in der ein Sender 11 angeordnet ist. Der Sender 11 ist als eine Infrarot-Leuchtdiode (IR-LED) 12 ausgebildet, die mit ihrem freien Ende 13 in einen vom Reflektor 3 aufgespannten Reflektorraum 14 hineinragt. Der Sender 11 bzw. die Infrarot-Leuchtdiode 12 ist so in dem Reflektor 3 angeordnet, daß das von ihr ausgesandte Infrarotlicht auf der Lichteintrittsfläche 7 fokussiert und in den Lichtleiter 4 eingekoppelt wird. In einer zweiten seitlichen Öffnung 15 des Reflektors 3 ist ein optischer Sensor bzw. Empfänger 16 angeordnet. Der Empfänger 16 ist als eine Infrarot-Fotodiode 17 ausgebildet, die mit ihrem freien Ende 18 über die zweite seitliche Öffnung 15 so in den Reflektorraum 14 hineinragt, daß sie auf die Lichteintrittsfläche 7 des Lichtleiters 4 fokussiert ist und aus der Lichteintrittsfläche 7 austretendes Infrarotlicht detektiert.

Sender 11 und Empfänger 16 bilden eine Reflexionslichtschranke, die die Lichtquelle 2 schaltet. Zu diesem Zweck sind Sender 11 und Empfänger 16 Teile einer nicht dargestellten elektronischen Schaltung, die über Steuer- bzw. Schaltgerät die Lichtquelle 2 schaltet.

Der Reflektor 3 ist über ein Kopplungselement 19 mit dem ersten Ende 6 des Lichtleiters 4 verbunden.

Von dem Sender 11 ausgestrahltes Infrarotlicht wird über die Lichteintrittsfläche 7 des Lichtleiters 4 in den Lichtleiter 4 eingekoppelt und über den Lichtaustritt 9 des Lichtaustrittselementes 5 in den Fahrzeuginnenraum ausgekoppelt. Nähert sich eine nicht dargestellte Hand oder ein Gegenstand dem Lichtaustritt 9, so wird das Infrarotlicht des Senders 11 an der Hand bzw. dem Gegenstand reflektiert und zumindest teilweise über den Lichtaustritt wieder in den Lichtleiter 4 eingekoppelt und über dessen Lichteintrittsfläche 7 ausgekoppelt und zu dem Empfänger 16 geleitet, von dem es detektiert wird. Sender 11 und Empfänger 16 wirken so als Reflexionslichtschranke, die die Lichtquelle 2 einschaltet, ausschaltet oder auch dimmt.

Nach einer anderen Ausführungsform ist zwischen Lichtquelle 2 und Lichteintrittsfläche 7 ein teildurchlässiger Spiegel 20 angeordnet. Sender 11' und Empfänger 16' sind an dem Kopplungselement 19' seitlich, d. h., in einem rechten Winkel zu einer Längsachse 21 des Reflektors 3', angeordnet.

Das von dem Sender 11' ausgestrahlte Infrarotlicht wird über den Spiegel 20 auf die Lichteintrittsfläche 7 des Lichtleiters 4 geleitet und in diesen eingekoppelt. Das aus der Lichteintrittsfläche 7 austretende reflektierte Infrarotlicht wird von dem teildurchlässigen Spiegel 20 reflektiert und zu dem Empfänger 16' geleitet. Von der Lichtquelle 2 ausgestrahltes Licht wird im wesentlichen durch den teildurchlässigen Spiegel hindurchgeleitet und auf die Eintrittsfläche 7 fokussiert und eingekoppelt.

Nach einer weiteren bevorzugten Ausführungsform der Erfindung sind Sender 11'' und Empfänger 16'' auf der der Lichtquelle 2 abgewandten Rückseite 22 des Reflektors 3'' angeordnet. Der Reflektor 3'' projiziert im wesentlichen nur den sichtbaren Anteil des Lichtes, d. h., das von der Lichtquelle 2 ausgestrahlte Licht wird auf die Lichteintrittsfläche 7 des Lichtleiters 4 projiziert, während ein Durchtritt von Infrarotstrahlung durch den Reflektor 3'' möglich ist. Sender 11'' und Empfänger 16'' sind so der Rückseite 22 vorgelagert, daß ein weitgehend ungehinderter Durchtritt der Infrarotstrahlen durch den Reflektor 3'' möglich ist und gleichzeitig Sender 11'' und Empfänger 16'' auf die Lichteintrittsfläche 7 fokussiert werden. Zur optimalen Fokussierung der Strahlen können weitere optische Elemente - beispielsweise Fresnellinsen 26 - der RücKseite 22 zum sender 11'' bzw. Empfänger 16'' hin vorgelagert werden.

Nach einer weiteren bevorzugten Ausführungsform der Erfindung bilden Sender 11'' ' und Empfänger 16''' ein kombiniertes Sender-/Empfängermodul 23, das über einen separaten Lichtleiter 24 mit dem Lichtaustrittselement 5 bzw. dessen Lichtaustritt 9 verbunden ist. Es ist aber auch möglich, dem Sender 11''' und dem Empfänger 16''' jeweils einen eigenen Lichtleiter 25 zuzuordnen.

Die Lichtleiter 4, 24, 25 sind nach einer bevorzugten Ausführungsform als flexible faseroptische Lichtleiter ausgebildet.

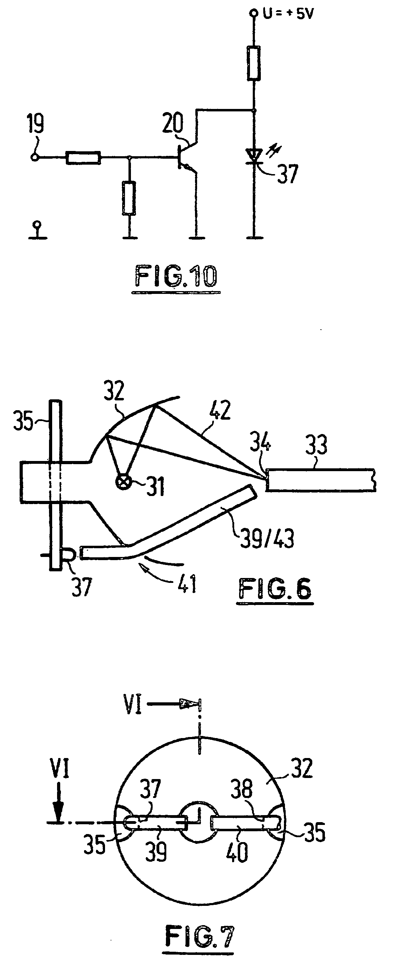

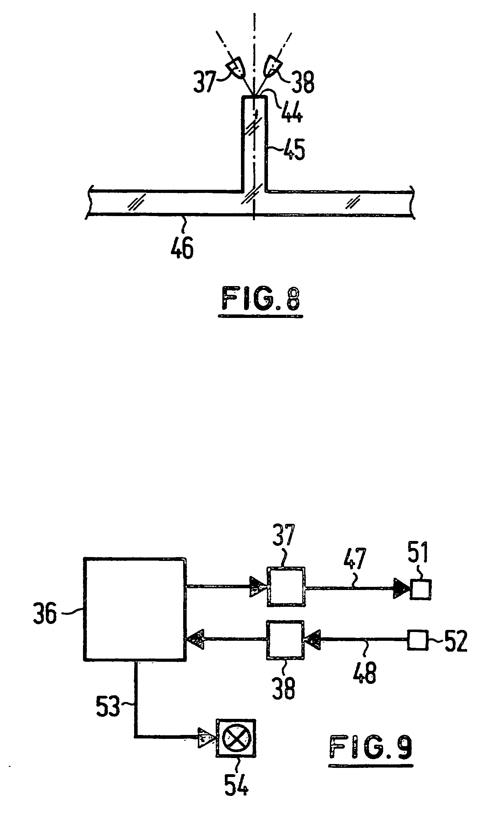

Nach einem weiteren Ausführungsbeispiel einer Leuchte gemäß Figur 6 und Figur 7 ist eine Lichtquelle 31 in einem ersten Brennpunkt eines Reflektors 32 angeordnet, der das Licht der Lichtquelle 31 auf eine an einem ersten Ende eines Lichtleiters 33 angeordnete Lichteintrittsfläche 34 fokussiert. Auf einer dem Lichtleiter 33 abgewandte Rückseite des Reflektors 32 ist senkrecht zur optischen Achse eine Leiterplatte 35 angeordnet, die eine Mehrzahl von elektronischen Bauelementen aufweist. Die elektronischen Bauelemente sind Teil einer Steuereinheit 36, mittels derer die Lichtquelle 31 bzw. ein auf der Leiterplatte 35 angeordneter Sender 37 und Empfänger 38 angesteuert werden. Der Sender 37 ist als Infrarot-Leuchtdiode und der Empfänger 8 Infrarot-Fototransistor ausgebildet. Der Sender 37 und der Empfänger 38 befinden sich vorzugsweise jeweils gegenüberliegend in einem Randbereich der Leiterplatte 35. Der Sender 37 und der Empfänger 38 sind vorzugsweise parallel zur optischen Achse des Reflektors 32 ausgerichtet. An den Sender 37 und den Empfänger 38 schließen sich jeweils unmittelbar ein zusätzlicher Lichtleiter 39 bzw. 40 an, die sich in einem ersten Abschnitt geradlinig und parallel zur optischen Achse in Richtung des Reflektors 32 erstrecken (axiale Erstreckung) und dann unter Abknikkung durch einen Durchbruch 41 des Reflektors 32 unter Bildung einer zusätzlichen radialen Erstreckungskomponente in Richtung der Lichteintrittsfläche 34 des Lichtleiters 33 verlaufen.

Alternativ können die Lichtleiter 39, 40 auch bogenförmig ausgebildet sein, wobei die Enden der Lichtleiter 39, 40 in radialer Richtung beabstandet zueinander sind.

Dadurch, daß der Durchbruch 41 in einem randnahen Bereich des Reflektors 32 angeordnet ist, stören die zusätzlichen Lichtleiter 39, 40 nur unwesentlich den Verlauf den durch die Lichtquelle 31 emittierten Lichtstrahlen 42. Die zusätzlichen Lichtleiter 39, 40 sind jeweils im Querschnitt vorzugsweise kreisförmig ausgebildet, wobei ein dem Lichtleiter 33 zugewandter gerader Abschnitt 43 derselben mit der optischen Achse des Reflektors 32 einen Winkel von 40° bis 60° bildet. In Figur 6 ist der Übersichtlichkeit halber lediglich auf einer Seite des Reflektors 32 ein zusätzlicher Lichtleiter 39 dargestellt. Nach einer zu der Ausführungsform nach Figur 6 und Figur 7 alternativen Ausführungsform gemäß Figur 8 können der Sender 37 und der Empfänger 38 selbst derart zu einer Stirnseite 44 eines zusätzlichen Lichtleiters 45 ausgerichtet sein, daß sie in einem Winkelbereich zwischen 40° und 60° zu der Längsachse des zusätzlichen Lichtleiters 45 bilden. Vorteilhaft kann hierbei ein einziger zusätzlicher Lichtleiter 45 sowohl für den Sender 37 als auch für den Empfänger 38 vorgesehen sein. Der zusätzliche Lichtleiter 45 ist zylinderförmig ausgebildet und weist einen Durchmesser von ca. 3 mm auf. Der Lichtleiter 45 ist einstückig mit einer die Leuchte abdeckenden Abdeckscheibe 46 verbunden, die aus Polycarbonat oder PMMA besteht.

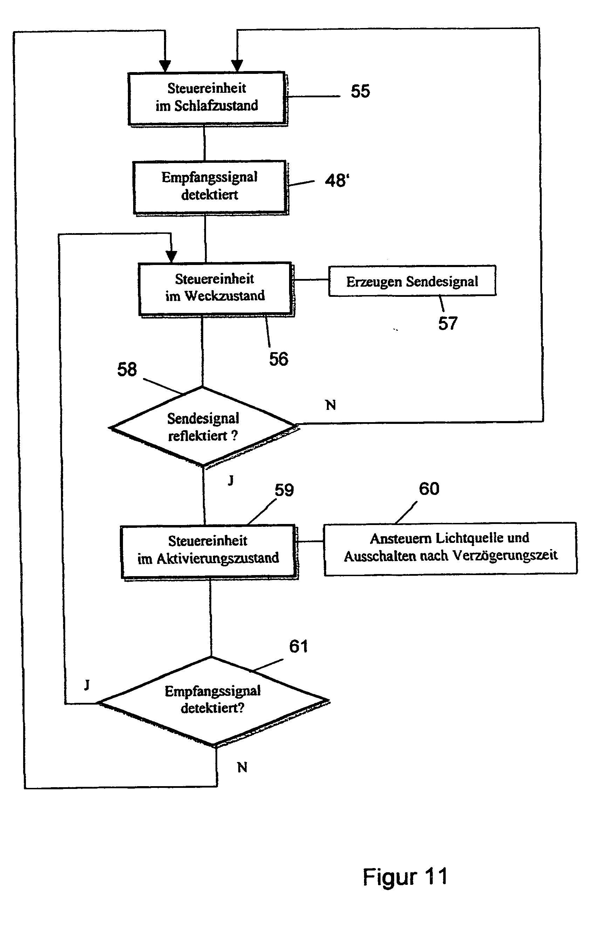

In Figur 9 ist ein Blockschaltbild von elektrischen Baueinheiten einer Leuchte schematisch dargestellt, die auf die vorgenannten Ausführungsbeispiele der Leuchte Anwendung finden. Die Steuereinheit 36 weist eine Mehrzahl von elektronischen Bauelementen auf, mittels derer der Sender 37 angesteuert wird zur Generierung eines Sendesignals 47. Ferner ist die Steuereinheit 36 mit dem Empfänger 38 verbunden, so daß ein Empfangssignal 48 des Empfängers 38 weiterverarbeitet werden kann.

Zur Ansteuerung des Senders 37 kann die Steuereinheit 36 beispielsweise eine Pulsmodulationsschaltung gemäß Figur 10 aufweisen, mittels derer das impulsmoduliertes Sendesignal 47 generiert werden kann. Zur Bildung eines von dem Sender 37 abstrahlenden Sendeimpulses liegt an einem Pulseingang 19 eine Spannung von 0 V an. Während dieses Impulses sperrt ein Transistor 20, so daß über den Sender 37 ein Strom fließen zur Abstrahlung eines entsprechenden Sendeimpulses. Während der Pulspause liegen an dem Pulseingang 19 eine Eingangsspannung von 5V an, so daß der Transistor 20 leitend wird und den Sender 37 kurzschließt. Der Strom fließt somit über den Transistor 20 ab. Er bildet den Ruhestrom für die Ansteuerschaltung des Senders 37.

Der Sender 37 kann somit ein impulsmoduliertes Sendesignal 47 abstrahlen, das an einer Auskoppelstelle 51 an die Umgebung abgegeben wird. Befindet sich in der Nähe ein Körper, beispielsweise eine Hand, wird dieses Sendesignal 47 reflektiert und über ein Einkoppelstelle 52 als Reflexionssignal, bzw. Empfangssignal 48 von dem Empfänger 38 detektiert. In der Steuereinheit 36 wird dieses Empfangssignal weiterverarbeitet und bei Feststellung der Übereinstimmung mit dem Sendesignal 47 ein Ansteuersignal 53 erzeugt zum Ansteuern einer Lichtquelle 54. Vorzugsweise weist die Steuereinheit 36 einen Mikroprozessor mit einem Speicher auf, in dem ein Steuerprogramm gespeichert ist.

Nach einem bevorzugten Ausführungsbeispiel gemäß Figur 11 ist das Steuerprogramm derart ausgebildet, daß sich die Steuereinheit 36 bzw. der Sender 37 grundsätzlich in einem Schlafzustand 55 befindet. In diesem Schlafzustand 55 wird der Sender 37 nicht angesteuert, so daß demzufolge kein Ruhestrom durch die Ansteuerschaltung des Senders 37 fließen kann. Erst wenn der Empfänger 38 ein Empfangssignal 48 erhält, Schritt 48', wird die Steuereinheit 36 bzw. der Sender 37 in einen Weckzustand 56 versetzt, in dem der Sender 37 ein Sendesignal 47 erzeugt, Schritt 57. Dies ist vorzugsweise ein impulsmoduliertes Sendesignal eines bestimmten Musters. Alternativ kann es auch eine sinusförmige Modulation sein. Wesentlich ist, daß das Sendesignal 47 ein Muster aufweist, so daß nach Reflexion desselben an einer in die Nähe der Leuchte bewegten Hand ein Empfangssignal 48 detektiert wird, das in der Steuereinheit 36 auf Übereinstimmung mit dem Sendesignal 47 überprüft werden kann.

Wird in der Steuereinheit 36 die Übereinstimmung bzw. Korrelation zwischen dem Sendesignal 47 und dem Empfangssignal 48 erkannt, handelt es sich bei dem Empfangssignal 48 um das reflektierte Sendesignal 47 und nicht um ein Fremdlicht, so daß nach dieser Überprüfung 58 die Steuereinheit in den Aktivierungszustand 59 versetzt wird. In diesem Aktivierungszustand 59 wird das Ansteuersignal 53 an die Lichtquelle 54 abgegeben und nach einer vorgegebenen Verzögerungszeit die Lichtquelle 54 ausgeschaltet, Schritt 60.

Wird während des Betriebs der Lichtquelle 54 ein weiteres Empfangssignal 48 detektiert, Schritt 61, wird der Sender 37 wieder in den Weckzustand 56 versetzt, der das Aussenden eines weiteren Sendesignals 57 bewirkt. Nach Aussenden dieses Testmusters wird erneut entschieden, ob tatsächlich ein in die Nähe der Leuchte gebrachter Körper eine Verlängerung des Betriebszustandes der Leuchte bedeutet. Wird innerhalb der Einschaltzeit der Lichtquelle 54 kein Empfangssignal detektiert, wird die Steuereinheit nach Ablauf der Verzögerungszeit zurück in den Schlafzustand 55 versetzt.

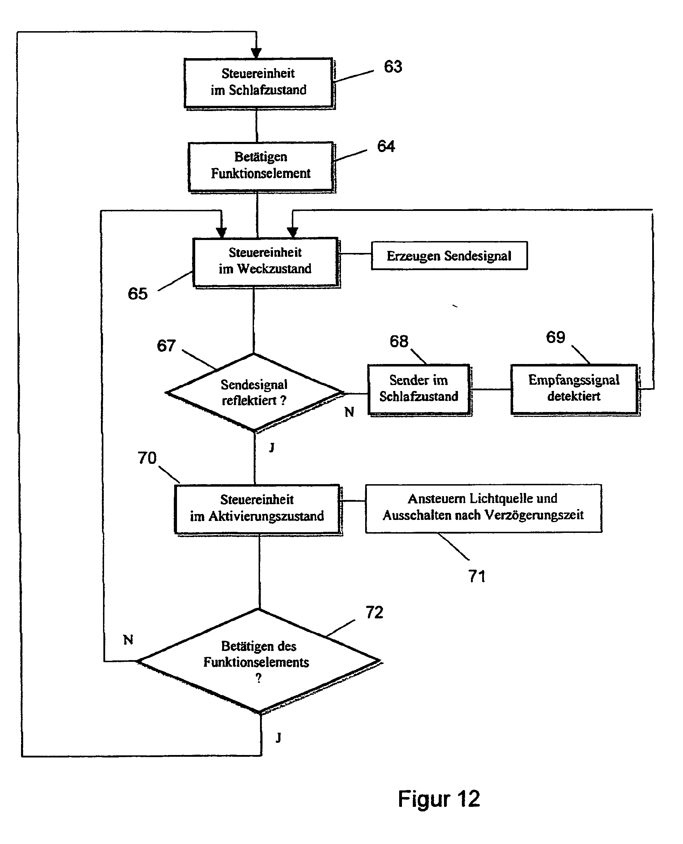

Nach einer alternativen Ausführungsform des Steuerprogramms gemäß Figur 12 ist eine gesamte Steuereinheit 62 unter Einschluß des Senders 37 und des Empfängers 38 in einem Schlafzustand 63 als Ausgangszustand. Durch Betätigen eines Funktionselementes 64, beispielsweise durch Herunterklappen einer Sonnenblende des Fahrzeugs, wird die Steuereinheit 62 in einen Weckzustand 65 versetzt, in dem der Sender 37 angesteuert wird zur Erzeugung eines Sendesignals. Nach Abgabe dieses Sendesignals und Empfang eines Empfangssignals wird in der Steuereinheit 62 eine Überprüfung 67 durchgeführt, ob es sich bei dem Empfangssignal tatsächlich um das reflektierte Sendesignal handelt. Korreliert das detektierte Empfangssignal nicht mit dem Sendesignal, wird der Sender 37 in einen Schlafzustand 68 versetzt, aus dem er erst nach Empfang eines Empfangssignals 69 in den Weckzustand 65 zurückversetzt wird. Ist jedoch in Schritt 67 die Übereinstimmung erkannt worden, wird die Steuereinheit 62 in den Aktivierungszustand 70 versetzt, so daß die Lichtquelle für ein vorgegebenes Zeitintervall angesteuert wird, 71. Wird nachfolgend das Funktionselement 64 in den Ausgangszustand zurückversetzt, 72, nimmt die Steuereinheit 62 wieder den Schlafzustand 63 an, in dem weder der Sender 37 noch der Empfänger 38 Energie verbrauchen.

Durch Kopplung mit einem Funktionselement, das beispielsweise auch als ein von der Leuchte entfernt angeordneter Schalter ausgebildet sein kann, kann der Energieeinsatz für die Ansteuerung der Lichtquelle wesentlich reduziert werden. Wird das Funktionselement nicht in den Ausgangszustand versetzt, wird die Steuereinheit 62 nach Ablauf der Verzögerungszeit wieder in den Weckzustand 65 versetzt, so daß durch stetiges Aussenden des Sendesignals fortwährend die Authentizität des Empfangssignals überprüft werden kann.

Alternativ kann die Steuereinheit 62 auch über eine Innenraumüberwachungseinrichtung des Fahrzeugs in den Weckzustand 65 versetzt werden. Damit kann der Betrieb der Steuereinheit 62 in Abhängigkeit von anderen elektrischen oder mechanischen Größen erfolgen, die mit der Leuchte in einem Wirkzusammenhang stehen könnten.

Alternativ kann die Steuereinheit in den Weckzustand 56, 65 auch durch die von der in die Nähe der Leuchte gebrachte Hand abgegebene Infrarotstrahlung selbst gebracht werden. Die Empfindlichkeit des Empfängers 38 ist an die Infrarotstrahlung angepaßt, wobei nach dem Detektieren dieses Empfangssignals der oben beschriebene Vorgang zur Überprüfung der Authentizität desselben durchgeführt wird. Hierdurch wird ein Ansprechen der Leuchte infolge eines Störsignals wirksam vermieden.

## Patentansprüche

1. Leuchte für Fahrzeuginnenräume mit einer Lichtquelle, einem Lichtaustritt und einem die Lichtquelle schaltenden optischen Sensor, **dadurch gekennzeichnet, daß** der optische Sensor einen Sender (11, 11', 11'', 11''', 37) und einen Empfänger (16, 16', 16' ', 16''', 38) aufweist zur Bildung einer Reflexionslichtschranke, wobei der Sender (11, 11', 11'', 11''', 37) ein Sendesignal (47) über eine Auskoppelstelle (51) der Leuchte abstrahlt, das bei Annäherung eines Körpers an die Auskoppelstelle (51) an demselben reflektiert wird und zumindest teilweise über eine Einkoppelstelle (52) auf den Empfänger (16, 16', 16'', 16''', 38) leitbar ist.

2. Leuchte nach Anspruch 1, **dadurch gekennzeichnet, daß** die Einkoppelstelle (52) und die Auskoppelstelle (51) einstückig miteinander verbunden sind.

3. Leuchte nach Anspruch 1 oder 2, **dadurch gekennzeichnet, daß** zwischen der Lichtquelle (2) und der Einkoppel- und Auskoppelstelle ein Lichtleiter (4) angeordnet ist, der an seinem der Lichtquelle (2) zugewandten ersten Ende (6) eine Lichteintrittsfläche (7) aufweist, in die das Licht der Lichtquelle (2) eingekoppelt wird, und daß die Lichtquelle (2) von einem Reflektor (3, 3', 3'') umgeben ist, der das Licht der Lichtquelle (2) bündelt und in die Lichteintrittsfläche (7) einkoppelt.

4. Leuchte nach einem der Ansprüche 1 bis 3, **dadurch gekennzeichnet, daß** die Einkoppel- (52) und/oder Auskoppelstelle (51) des Empfängers (38) bzw. des Senders (37) einen Lichtaustritt (9) des Lichtleiters (4) bilden.

5. Leuchte nach einem der Ansprüche 1 bis 4, **dadurch gekennzeichnet, daß** der optische Sender (11, 11', 11'', 11''') als Infrarot-Leuchtdiode (12) ausgebildet ist.

6. Leuchte nach einem der Ansprüche 1 bis 5, **dadurch gekennzeichnet, daß** der Empfänger (16, 16', 16'', 16''') als Infrarot-Fotodiode (17) ausgebildet ist.

7. Leuchte nach einem der Ansprüche 1 bis 5, **dadurch gekennzeichnet, daß** der Empfänger (16, 16', 16' ', 16''') als Infrarot-Fototransistor ausgebildet ist.

8. Leuchte nach einem der Ansprüche 1 bis 7, **dadurch gekennzeichnet, daß** Sender (11) und Empfänger (16) am Reflektor (3) der Lichtquelle (2) so positioniert sind, daß einerseits eine möglichst geringe Reflektorfläche benötigt wird und andererseits Sender (11) und Empfänger (16) auf die Lichteintrittsfläche (7) fokussiert sind.

9. Leuchte nach einem der Ansprüche 1 bis 7, **dadurch gekennzeichnet, daß** zwischen Lichtquelle (2) und Lichteintrittsfläche (7) ein teildurchlässiger Spiegel (20) angeordnet ist, über den Sender (11') und Empfänger (16') auf die Lichteintrittsfläche (7) fokussiert sind.

10. Leuchte nach einem der Ansprüche 1 bis 7, **dadurch gekennzeichnet, daß** Sender (11'') und Empfänger (16'') auf der der Lichtquelle (2) abgewandten Rückseite (22) des Reflektors (3'') angeordnet sind und daß der Reflektor (3'') für Infrarotstrahlung durchlässig ist, so daß für die Infrarotstrahlung Sender (11'') und Empfänger (16' ') auf die Lichteintrittsfläche (7) fokussiert sind.

11. Leuchte nach einem der Ansprüche 1 bis 7, **dadurch gekennzeichnet, daß** Sender (11''') und Empfänger (16''') über mindestens einen zusätzlichen Lichtleiter (24, 25) mit dem Lichtaustritt (9) verbunden sind.

12. Leuchte nach einem der Ansprüche 1 bis 11, **dadurch gekennzeichnet, daß** der Sender (11, 11', 11'', 11''') und Empfänger (16, 16', 16'', 16''') zusammen mit einer Steuereinheit (36) auf einer gemeinsamen Leiterplatte (35) positioniert sind, wobei die Leiterplatte (35) auf einer der Lichtquelle (2, 31) abgewandten Rückseite (22) des Reflektors (3'') angeordnet ist.

13. Leuchte nach einem der Ansprüche 1 bis 12, **dadurch gekennzeichnet, daß** in dem Reflektor (32) mindestens ein Durchbruch (41) vorgesehen ist, durch den jeweils ein zusätzlicher Lichtleiter (39) hindurchragt.

14. Leuchte nach einem der Ansprüche 1 bis 13, **dadurch gekennzeichnet, daß** die Lichtquelle (2) mit der Steuereinheit (36) gekoppelt ist, in der das Ansteuersignal (53) für die Lichtquelle (2) und das Ansteuersignal für den Sender (37) zur Abstrahlung eines modulierten Sendesignals (47) erzeugt wird.

15. Leuchte nach einem der Ansprüche 1 bis 14, **dadurch gekennzeichnet, daß** der das Licht führende Lichtleiter (4) und/ oder der das Sendesignal führende Lichtleiter (24, 25) und/ oder der das Empfängersignal führende Lichtleiter (24, 25) einstückig mit einer Abdeckscheibe (46) der Leuchte verbunden ist und daß der Lichtleiter (4, 24, 25) senkrecht zu der Abdeckscheibe ausgerichtet ist.

16. Leuchte nach einem der Ansprüche 1 bis 15, **dadurch gekennzeichnet, daß** die Lichtquelle (2) als Leuchtdiode ausgebildet ist, in die von der Steuereinheit (36) das modulierte Sendesignal einprägbar ist, wobei das Lichtsignal und das Sendesignal über denselben Lichtleiter in die Umgebung ausgekoppelt wird.

17. Leuchte nach einem der Ansprüche 1 bis 16, **dadurch gekennzeichnet, daß** die Lichtleiter (4, 24, 25) als faseroptische Lichtleiter ausgebildet sind.

18. Verfahren zum Steuern eine Leuchte für Fahrzeuginnenräume, wobei ein die Leuchte steuerndes Steuersignal in Abhängigkeit von einem durch einen optischen Sensor gelieferten Sensorsignal in einer der Leuchte zugeordneten Steuereinheit erzeugt wird, **dadurch gekennzeichnet,**
**daß** von einem Sender (11, 11', 11'', 11''', 37) des optischen Sensors ein Mustersignal (47) erzeugt und einer Auskoppelstelle (51) der Leuchte zugeführt wird, daß über eine Einkoppelstelle (52) der Leuchte ein Empfangssignal (48) zu einem Empfänger (16, 16', 16'', 16''', 38) des optischen Sensors geleitet wird, daß das Empfangssignal (48) mit dem von dem Sender (37) erzeugten Mustersignal (47) verglichen wird, so daß das Empfangssignal (48) als ein an ein in der Nähe der Auskoppelstelle (51) gehaltener Körper reflektiertes Reflexionssignal erkannt werden kann, und daß bei Vorliegen einer Übereinstimmung des Empfangssignals (48) mit dem Mustersignal (47) das Steuersignal (53) generiert wird zum Ansteuern der Lichtquelle (54).

19. Verfahren nach Anspruch 18, **dadurch gekennzeichnet, daß** das Sendesignal (47) als moduliertes Sendesignal von dem Sender (11, 11', 11'', 11''', 37) abgestrahlt wird.

20. Verfahren nach Anspruch 18 oder 19, **dadurch gekennzeichnet, daß** das Sendesignal (47) als impulsmoduliertes Sendesignal von dem Sender (11, 11', 11'', 11''') abgestrahlt wird.

21. Verfahren zum Steuern einer Leuchte für Fahrzeuginnenräume, wobei ein die Leuchte steuerndes Steuersignal in Abhängigkeit von einem durch einen optischen Sensor gelieferten Sensorsignal in einer der Leuchte zugeordneten Steuereinheit erzeugt wird, **dadurch gekennzeichnet, daß** sich die Steuereinheit (36) in einem energiesparenden Schlafzustand befindet und erst dann in einen ein Mustersignal (47) abgebenden Weckzustand übergeht, wenn ein Empfangssignal (48) in einem Empfänger (38) detektiert wird, daß in dem Weckzustand der Steuereinheit (36) das Mustersignal (47) von einem Sender (37) abgestrahlt wird und anschließend das von dem Empfänger (38) detektierte Empfangssignal (48) auf Übereinstimmung mit dem gesendeten Mustersignal (47) überprüft wird zur Erkennung eines in der Nähe einer Auskoppelstelle positionierten Körpers und daß in dem Aktivierungszustand der Steuereinheit (36) ein Steuersignal (53) generiert wird zum Ansteuern der Lichtquelle (54).

22. Verfahren nach Anspruch 21, **dadurch gekennzeichnet, daß** der Aktivierungszustand der Steuereinheit (36) während einer vorgegebenen Einschaltzeit der Lichtquelle (2) aufrechterhalten wird.

23. Verfahren nach Anspruch 21 oder 22, **dadurch gekennzeichnet, daß** in dem Aktivierungszustand der Steuereinheit (36) in Abhängigkeit von dem Vorliegen von Empfangssignalen mindestens ein weiteres korrespondierendes Mustersignal als Sendesignal abgestrahlt wird und das detektierte Empfangssignal auf Übereinstimmung mit dem abgestrahlten Sendesignal überprüft wird zur Generierung eines weiteren, die Einschaltzeit verlängernden Steuersignals für die Lichtquelle.

24. Verfahren nach einem der Ansprüche 21 bis 23, **dadurch gekennzeichnet, daß** bei Feststellung der Nichtübereinstimmung des Empfangssignals mit dem Sendesignal die Steuereinheit (36) unmittelbar von dem Weckzustand in den Schlafzustand versetzt wird.

25. Verfahren nach einem der Ansprüche 21 bis 24, **dadurch gekennzeichnet, daß** die Steuereinheit in Abhängigkeit von dem Vorliegen eines detektierten Empfangssignals in einen Weckzustand überführt wird, in dem das Mustersignal generiert wird.

26. Verfahren nach einem der Ansprüche 21 bis 24, **dadurch gekennzeichnet, daß** die Steuereinheit in Abhängigkeit von dem Bestätigen eines der Leuchte zugeordneten Funktionselementes in einen Weckzustand versetzt wird, in dem das Mustersignal generiert wird.

27. Verfahren nach einem der Ansprüche 21 bis 26, **dadurch gekennzeichnet, daß** das Sendesignal moduliert wird.

## Claims

1. Vehicle interior light unit having a light source, a light outlet and an optical sensor controlling said light source, **characterized by** the fact that the optical sensor comprises a transmitter (11, 11', 11", 11"', 37) and a receiver (16, 16', 16", 16"', 38) to form a reflection barrier, said transmitter (11, 11', 11", 11"', 37) emitting a transmit signal (47) via an output position (51) of the light unit which is adapted to be reflected by a body approaching said output position (51) and to be at least partially directed to said receiver (16, 16', 16", 16"', 38) via an input position (52).

2. Light unit as set forth in Claim 1, **characterized by** the fact that said input position (52) and said output position (51) are combined to form one integral unit.

3. Light unit as se forth in Claim 1 or 2, **characterized by** the fact that a light conductor (4) is disposed between said light source (2) and the input/output position which at its first end (6) facing the light source (2) is provided with a light entry surface (7) for light from the light source (2) to be entered into, and that the light source (2) is surrounded by a reflector (3, 3!, 3") adapted to focus the light from the light source (2) and to enter it into the light entry surface (7).

4. Light unit as set forth in any of the preceding Claims 1 to 3, **characterized by** the fact that the input position (52) and/or the output position (51) of said receiver (38) and said transmitter (37), respectively, are forming a light outlet (9) of the light conductor (4).

5. Light unit as set forth in any of the preceding Claims 1 to 4, **characterized by** the fact that the optical transmitter (11, 11', 11", 11"') is provided in the form of an infrared LED (12).

6. Light unit as set forth in any of the preceding Claims 1 to 5, **characterized by** the fact that the receiver (16, 16', 16", 16"') is provided in the form of an infrared photodiode (17).

7. Light unit as set forth in any of the preceding Claims 1 to 5, **characterized by** the fact that the receiver (16, 16', 16", 16"') is provided in the form of an infrared phototransistor.

8. Light unit as set forth in any of the preceding Claims 1 to 7, **characterized by** the fact that transmitter (11) and receiver (16) are disposed on a reflector (3) of the light source (2) in such a way that the reflector area needed be kept to a minimum on one hand and that transmitter (11) and receiver (16) are focussed on the light entry surface (7) on the other hand.

9. Light unit as set forth in any of the preceding Claims 1 to 7, **characterized by** the fact that a semireflecting mirror (20) is arranged between said light source (2) and said light entry surface (7) to focus the transmitter (11') and the receiver (16') on said light entry surface (7).

10. Light unit as set forth in any of the preceding Claims 1 to 7, **characterized by** the fact that the transmitter (11") and the receiver (16") are disposed at the rear side (22) of the reflector (3") which is facing away from the light source (2) and that the reflector (3") is permeable to infrared radiation so that transmitter (11") and receiver (16") are focussed on said light entry surface (7) for said infrared radiation to pass to.

11. Light unit as set forth in any of the preceding Claims 1 to 7, **characterized by** the fact that the transmitter (11"') and the receiver (16"') are connected to the light outlet (9) via one additional light conductor (24, 25) at least.

12. Light unit as set forth in any of the preceding Claims 1 to 11, **characterized by** the fact that the transmitter (11, 11', 11", 11"') and the receiver (16, 16', 16", 16"') are disposed on one common printed circuit board (35) together with a control unit (36), said printed circuit board (35) being arranged at the rear (22) of the reflector (3") which is facing away from the light source (2, 31).

13. Light unit as set forth in any of the preceding Claims 1 to 12, **characterized by** the fact that at least one opening (41) is provided in the reflector (32) through which an additional light conductor (39) protrudes.

14. Light unit as set forth in any of the preceding Claims 1 to 13, **characterized by** the fact that the light source (2) is coupled to the control unit (36) in which the drive signal (53) activating the light source (2) and the drive signal activating the transmitter (37) are generated to emit a modulated transmit signal (47).

15. Light unit as set forth in any of the preceding Claims 1 to 14, **characterized by** the fact that the light carrying light conductor (4) and/or the transmit signal carrying light conductor (24, 25) and/or the receive signal carrying light conductor (24, 25) are integrally connected to a light unit cover pane (46) and that said light conductor (4, 24, 25) is disposed perpendicular to said pane.

16. Light unit as set forth in any of the preceding Claims 1 to 15, **characterized by** the fact that the light source (2) is provided as LED into which the transmit signal modulated by the control unit (36) may be impressed, the light signal and the transmit signal being extracted into the environment via that same light conductor.

17. Light unit as set forth in any of the preceding Claims 1 to 16, **characterized by** the fact that the light conductors (4, 24, 25) are of optical fiber type.

18. Method for controlling a vehicle interior light unit wherein a control signal controlling said light unit is generated in dependence on a sensor signal supplied by an optical sensor in a control unit associated with said light unit, **characterized by** the fact that a pattern signal is generated by a transmitter (11, 11', 11", 11"', 37) of the optical sensor and supplied to an output position (51) of the light unit, that a receive signal (48) is directed to a receiver (16, 16', 16", 16"', 38) of the optical sensor via an input position (52), that the receive signal (48) is compared with the pattern signal (47) generated by the transmitter (37) such that said receive signal (48) may be recognized as a reflection signal reflected by a body positioned near said output position (51), and that in case of correlation between said receive signal (48) and said pattern signal (47) the control signal (53) is generated to activate the light source (54).

19. Method as set forth in Claim 18, **characterized by** the fact that the transmit signal (47) is emitted by the transmitter (11, 11', 11", 11"', 37) as a modulated transmit signal.

20. Method as set forth in Claim 18 or 19, **characterized by** the fact that the transmit signal (47) is emitted by the transmitter (11, 11', 11", 11"',) as a pulse modulated transmit signal.

21. Method for controlling a vehicle interior light unit wherein a control signal to control said light unit is generated in a control unit associated therewith in dependence on a sensor signal supplied by an optical sensor, **characterized by** the fact that the control unit (36) is in an energy-saving sleep or inactive state and not going to change over to an alert or inactive state for a pattern signal (47) to be given out until a receive signal (48) is detected in one of the receivers (38), that with the control unit (36) in said alert state the pattern signal (47) is emitted by a transmitter (37) following which the receive signal (48) detected by the receiver (38) is checked for correlation with said pattern signal (47) as transmitted to recognize a body positioned near an output position, and that with the control unit (36) in said alert state a control signal (53) is generated to activate the light source (54).

22. Method as set forth in Claim 21, **characterized by** the fact that the alert state of the control unit (36) is maintained for a predetermined ON-time of the light source (2).

23. Method as set forth in Claim 21 or 22, **characterized by** the fact that with the control unit (36) in said alert state there is at least one more corresponding pattern signal emitted as transmit signal in dependence on the presence of receive signals and that a detected receive signal is checked for correlation with the emitted transmit signal such that another control signal adapted to prolong said ON-time of the light source may be generated.

24. Method as set forth in any of the preceding Claims 21 to 23, **characterized by** the fact that the control unit (36) is changed directly from alert to sleep state when there is found that the receive signal fails to coincide with the transmit signal.

25. Method as set forth in any of the preceding Claims 21 to 24, **characterized by** the fact that dependent on the presence of a detected receive signal the control unit is changed to an alert state in which the pattern signal is generated.

26. Method as set forth in any of the preceding Claims 21 to 24, **characterized by** the fact that dependent on activation of a functional element associated with the light unit the control unit is changed to an alert state in which the pattern signal is generated.

27. Method as set forth in any of the preceding Claims 21 to 26, **characterized by** the fact that the transmit signal is modulated.

## Revendications

1. Appareil d'éclairage intérieur pour véhicules automobiles avec une source de lumière, une sortie de lumière et un détecteur optique qui commute la source de lumière,
**caractérisé en ce que** le détecteur optique présente un émetteur (11, 11', 11 ", 11"', 37) et un récepteur (16, 16', 16", 16"', 38) pour la formation d'une barrière lumineuse à réflexion, l'émetteur (11, 11' 11 ", 11 "', 37) émettant, par l'intermédiaire d'un point de sortie (51) de l'appareil d'éclairage, un signal (47) qui, lorsqu'un corps s'approche dudit point de sortie (51), est réfléchi sur celui-ci et peut être transmis, au moins partiellement, au récepteur (16, 16', 16", 16"', 38), par l'intermédiaire d'un point d'admission (52).

2. Appareil d'éclairage selon la revendication 1, **caractérisé en ce que** le point d'admission (52) et le point de sortie (51) sont reliés ensemble d'une pièce.

3. Appareil d'éclairage selon revendication 1 ou 2, **caractérisé en ce que**, entre la source de lumière (2) et le point d'admission et le point de sortie, est agencé un guide d'onde optique (4) qui, à sa première extrémité (6), orientée vers sa source de lumière (2), présente une surface d'admission de la lumière (7) dans laquelle la lumière de la source de lumière (2) est couplée, et **en ce que** la source de lumière (2) est entourée par un réflecteur (3, 3', 3") qui concentre la lumière de la source de lumière (2) et la couple à la surface d'admission de lumière (7).

4. Appareil d'éclairage selon l'une des revendications 1 à 3, **caractérisé en ce que** le point d'admission (52) et / ou le point de sortie (51) du récepteur (38), respectivement de l'émetteur (37) forment une sortie de lumière (9) du guide d'onde optique (4).

5. Appareil d'éclairage selon l'une des revendications 1 à 4, **caractérisé en ce que** l'émetteur (11, 11', 11 ", 11"') est conçu en tant que diode électroluminescente infrarouge (12).

6. Appareil d'éclairage selon l'une des revendications 1 à 5, **caractérisé en ce que** le récepteur (16, 16', 16", 16"') est conçu en tant que photodiode infrarouge (17).

7. Appareil d'éclairage selon l'une des revendications 1 à 5, **caractérisé en ce que** le récepteur (16, 16', 16", 16"') est conçu en tant que phototransistor infrarouge.

8. Appareil d'éclairage selon l'une des revendications 1 à 7, **caractérisé en ce que** l'émetteur (11) et le récepteur (16) sont positionnés sur le réflecteur (3) de la source de lumière (2), **en ce que**, d'une part, une surface de réflecteur aussi faible que possible est nécessaire, et que, d'autre part, émetteur (11) et récepteur (16) sont focalisés sur la surface d'admission de la lumière (7).

9. Appareil d'éclairage selon l'une des revendications 1 à 7, **caractérisé en ce que**, entre la source de lumière (2) et la surface d'admission de lumière (7), est agencé un miroir (20) partiellement perméable, par l'intermédiaire duquel émetteur (11') et récepteur (16') sont focalisés sur la surface d'admission de lumière (7).

10. Appareil d'éclairage selon l'une des revendications 1 à 7, **caractérisé en ce qu'**émetteur (11 ") et récepteur (16") sont disposés sur la face arrière (22) du réflecteur (3"), opposée à la source de lumière (2), et **en ce que** le réflecteur (3") est perméable aux rayons infrarouges de sorte que, pour les rayons infrarouges, l'émetteur (11 ") et le récepteur (16") sont focalisés sur la surface d'admission de lumière (7).

11. Appareil d'éclairage selon l'une des revendications 1 à 7, **caractérisé en ce que** émetteur (11"') et récepteur (16"') sont reliés à la sortie de lumière (9) par l'intermédiaire d'au moins un guide d'onde optique (24, 25).

12. Appareil d'éclairage selon l'une des revendications 1 à 11, **caractérisé en ce que** l'émetteur (11, 11', 11", 11"') et le récepteur (16, 16', 16", 16"') sont positionnés ensemble avec une unité de commande (36) sur une plaquette de circuits imprimés (35), ladite plaquette de circuits imprimés (35) étant agencée sur une face arrière (22) du réflecteur (3") opposée à la source de lumière (2, 31).

13. Appareil d'éclairage selon l'une des revendications 1 à 12, **caractérisé en ce que**, le réflecteur (32) est pourvu d'au moins un passage (41) à travers lequel un guide d'onde optique (39) supplémentaire fait saillie.

14. Appareil d'éclairage selon l'une des revendications 1 à 13, **caractérisé en ce que** la source de lumière (2) est couplée à l'unité de commande (36) dans laquelle le signal d'excitation (53) de la source de lumière (2) et le signal d'excitation de l'émetteur (37) sont générés pour l'émission d'un signal modulé (47).

15. Appareil d'éclairage selon l'une des revendications 1 à 14, **caractérisé en ce que** le guide d'onde optique (4) conduisant la lumière et / ou le guide d'onde optique (24, 25) conduisant le signal d'émission et / ou le guide d'onde optique (24, 25) conduisant le signal de réception sont reliés d'une pièce à une plaque de recouvrement (46) de l'appareil d'éclairage, et **en ce que** les guides d'onde optique (4, 24, 25) sont orientés perpendiculairement à la plaque de recouvrement.

16. Appareil d'éclairage selon l'une des revendications 1 à 15, **caractérisé en ce que** la source de lumière (2) est conçue en tant que diode électroluminescente, dans laquelle le signal modulé peut être envoyé par l'unité de commande (36), le signal lumineux et le signal de réception étant couplés à l'entourage par l'intermédiaire du même guide d'onde optique.

17. Appareil d'éclairage selon l'une des revendications 1 à 16, **caractérisé en ce que** les guides d'onde optique (4, 24, 25) sont réalisés en tant que guides d'onde optique à fibre optique.

18. Procédé pour la commande d'un appareil d'éclairage intérieur pour véhicules automobiles, un signal de commande, commandant ledit appareil d'éclairage en fonction d'un signal délivré par un détecteur optique, étant généré dans une unité de commande associée audit appareil d'éclairage, **caractérisé en ce que**,
par un émetteur (11, 11', 11 ", 11"', 37) du détecteur optique, un signal modèle (47) est généré et transmis à un point de sortie (51) de l'appareil d'éclairage, **en ce que**, par l'intermédiaire d'un point d'admission (52) de l'appareil d'éclairage, un signal de réception (48) est conduit à un récepteur (16, 16', 16", 16"', 38) du détecteur optique, que le signal de réception (48) est comparé avec le signal modèle (47), généré par l'émetteur (37), de manière à ce que le signal de réception (48) puisse être reconnu en tant que signal de réflexion, réfléchi sur un corps se trouvant à proximité du point de sortie (51), et qu'en cas de concordance entre le signal de réception (48) et le signal modèle (47), le signal de commande (53) est généré pour exciter la source de lumière (54).

19. Procédé selon la revendication 18, **caractérisé en ce que** le signal d'émission (47) est émis par l'émetteur (11, 11', 11", 11"', 37) en tant que le signal d'émission modulé.

20. Procédé selon revendication 18 ou 19, **caractérisé en ce que** le signal d'émission (47) est émis par l'émetteur (11, 11', 11 ", 11"') en tant que signal d'émission modulé par impulsions.

21. Procédé pour la commande d'un appareil d'éclairage intérieur pour véhicules automobiles, un signal de commande commandant ledit appareil d'éclairage en fonction d'un signal délivré par un détecteur optique étant généré dans une unité de commande associée audit appareil d'éclairage, **caractérisé en ce que** l'unité de commande (36) se trouve dans un état de veille peu consommateur d'énergie et ne passe à un état d'alerte, émettant un signal modèle (47) que quand un signal de réception (48) est détecté dans un récepteur (38), **en ce que**, lorsque l'unité de commande (36) est dans un état d'alerte, le signal modèle (47) est émis par un émetteur (37), et **en ce que** le signal de réception (48), détecté par le récepteur (38), est ensuite contrôlé, quant à la concordance avec le signal modèle (47) émis, pour détecter un corps positionné à proximité d'un point de sortie, et **en ce que**, quand l'unité de commande (36) est active, un signal de commande (53) est généré pour exciter la source de lumière (54).

22. Procédé selon la revendication 21, **caractérisé en ce que** l'état activé de l'unité de commande (36) est maintenu pendant un temps d'activation prédéterminé de la source de lumière (2).

23. Procédé selon revendication 21 ou 22, **caractérisé en ce que**, lorsque l'unité de commande (36) est activée, au moins un autre signal modèle correspondant est émis en tant que signal d'émission, en dépendance de la présence de signaux de réception, et que le signal de réception détecté est contrôlé quant à la concordance avec le signal d'émission émis, pour la génération d'un autre signal de commande prolongeant la durée d'activation de la source de lumière.

24. Procédé selon l'une des revendications 21 à 23, **caractérisé en ce que**, lors de la constatation d'un manque de concordance entre le signal de réception et le signal d'émission, l'unité de commande (36), passe immédiatement de l'état d'alerte à l'état de veille.

25. Procédé selon l'une des revendications 21 à 24, **caractérisé en ce que** l'unité de commande, en fonction de la présence d'un signal de réception détecté, est mise dans un état d'alerte, dans lequel le signal modèle est généré.

26. Procédé selon l'une des revendications 21 à 24, **caractérisé en ce que** l'unité de commande, en dépendance de l'actionnement d'un élément de fonctionnement associé à l'appareil d'éclairage, est mise dans un état d'alerte, dans lequel le signal modèle est généré.

27. Procédé selon l'une des revendications 21 à 26, **caractérisé en ce que** le signal de réception est modulé.
